# EUROPÄISCHE PATENTANMELDUNG

(11) **EP 0 874 506 A2**
(43) Veröffentlichungstag der Anmeldung: **28.10.1998**
(21) Anmeldenummer: 98103965.4
(22) Anmeldetag: 06.03.1998
(51) Int. Cl.: H04M 3/22, H04Q 3/00

(54) **Verfahren zum Abarbeiten von Service-Aktionen für Telekommunikationsanlagen**

(30) Priorität: 26.04.1997 DE 19717733
(71) Anmelder: ROBERT BOSCH GMBH, 70442 Stuttgart (DE)
(72) Erfinder: Schmidt, Ralf, 55128 Mainz (DE); Brandt, Steffen, 18106 Rostock (DE)

(57) **Zusammenfassung**

Die Erfindung betrifft ein Verfahren zum Abarbeiten von zumindest einer Service-Aktion für wenigstens eine Telekommunikationsanlage, die ein proprietäres Schnittstellenprotokoll bzw. eine I3-Service-Schnittstelle für einen analogen bzw. digitalen Service-Zugang aufweist, unter Steuerung durch einen Rechner, insbesondere einen PC, gekennzeichnet durch die Schritte: Festlegen der Art der Service-Aktion über eine Benutzeroberfläche des Rechners und Abspeichern der festgelegten Service-Aktion in wenigstens einer Kommandodatei, Festlegen eines Zeitrahmens für die Service-Aktion, Erstellen eines Batch-Auftrags durch Verknüpfen der Kommandodatei mit dem Zeitrahmen, Verknüpfen des Batch-Auftrags mit der Rechner-Systemzeit, und Abarbeiten des Batch-Auftrags über das Schnittstellenprotokoll der Telekommunikationsanlage.

## Beschreibung

Die Erfindung betrifft ein Verfahren zum Abarbeiten von zumindest einer Service-Aktion für wenigstens eine Telekommunikationsanlage nach dem Oberbegriff des Anspruchs 1.

### Stand der Technik

Bekannt ist ein Verfahren gemäß welchem die manuelle Ausführung von Online-Service-Aktionen an einer einzigen Telekommunikationsanlage unterstützt wird. Seitens der Telekommunikationsanlage existiert ein proprietäres Schnittstellenprotokoll z.B. die I3-Service-Schnittstelle für den analogen Service-Zugang (HKZ) über ein Modem und den digitalen Service-Zugang (T0, S2M) via ISDN, wobei die Service-Zugänge aus der Ferne über das öffentliche Telekommunikationsnetz erfolgen. Telekommunikationsanlagen besitzen aus Kostengründen keine Möglichkeit untereinander zu kommunizieren. Die ausschließlich manuelle Ausführbarkeit von Service-Aktionen ist zeitintensiv und lediglich beschränkt zuverlässig, da sie stets den Eingriff einer Bedienperson erfordert. Da Service-Aktionen bislang eine Bedienperson zur Ausführung erfordern, werden diese Aktionen in der Regel zur normalen Arbeitszeit, also tagsüber durchgeführt, was den Nachteil beinhalten kann, daß die Telekommunikationsanlagen dadurch vorübergehend nicht benutzbar sind, und daß relativ ungünstige Gebühren von Telekommunikationsgesellschaften in Kauf genommen werden müssen.

### Vorteile der Erfindung

Das Verfahren mit den Merkmalen des Hauptanspruchs weist demgegenüber den Vorteil auf, daß unter Verwendung des existierenden Service-Protokolls von Telekommunikationsanlagen ein automatisches, rechnergesteuertes Abarbeiten von wenigstens einer Service-Aktion für wenigstens eine Telekommunikationsanlage bereitgestellt werden kann. Durch das automatische, rechnergesteuerte Abarbeiten von Service-Aktionen, können diese zu einem beliebigen Zeitpunkt, also beispielsweise während des günstigen Mondscheintarifs ausgeführt werden, und zwar ohne daß Bedienpersonal erforderlich ist, da der Rechner bzw. Computer dieses auf Grundlage des erfindungsgemäßen Verfahrens vollständig ersetzt.

Das erfindungsgemäße Verfahren läßt sich außerdem deshalb kostengünstig implementieren, weil keine Erweiterungen des bestehenden Schnittstellenprotokolls von Telekommunikationsanlagen erforderlich sind, d.h. es ist kein anlagenseitiger, sondern nur ein PC-seitiger Aufwand notwendig.

Weitere vorteilhafte Ausgestaltungen sind den Unteransprüchen zu entnehmen.

Vorteilhafterweise wird die gewünschte Service-Aktion durch einen Anwender mittels einer definierten Kommandosprache bzw. Syntax eingegeben und in einer Kommandodatei abgespeichert. Dabei steht es dem Anwender frei, die Service-Aktion bzw. mehrere Service-Aktionen für eine oder mehrere Telekommunikationsanlagen auf eine oder mehrere Kommandodateien zu verteilen.

Vorteilhafterweise erfolgt, wie an sich bekannt, eine Fernübertragung der Service-Aktion bzw. der Service-Aktionen zu der jeweiligen Telekommunikationsanlage bzw. den Telekommunikationsanlagen. Die Fernübertragung erfolgt bevorzugt über das Telekommunikationsnetz, und zwar gegebenenfalls mittels ISDN und Modem oder alternativ hierzu vor Ort mittels einer externen Schnittstelle, wie etwa einer S0-, einer a/b-, einer V.24 oder einer AEI-Schnittstelle.

Das erfindungsgemäße Festlegen eines Zeitrahmens für die Service-Aktion bzw. die Service-Aktionen enthält bevorzugt das Vorsehen eines Startzeitpunkts und gegebenenfalls auch eines Abbruchzeitpunkts, und besonders bevorzugt auch das Bereitstellen eines täglichen Unterbrechungszeitraums, so daß sichergestellt ist, daß die Service-Aktion bzw. die Service-Aktionen außerhalb der Geschäftszeit des Kunden stattfinden.

Vorteilhafterweise werden sämtliche anstehenden Batch-Aufträge über eine Übersichtsliste verwaltet und für den Benutzer angezeigt. Das heißt, der Benutzer erhält den aktuellen Status eines jeden Batch-Auftrags angezeigt und vorteilhafterweise werden sämtliche Service-Aktionen in einer Journal-Datei mit Datum und Uhrzeit protokolliert.

Als Service-Aktionen kommen alternativ oder kumulativ insbesondere in Betracht: Eine Software-Aktualisierung bzw. ein Software-Update von Steuerungsbaugruppen, die Umstellung einzelner Daten, wie beispielsweise der Währung - beispielsweise DM in EURO, Telefoneinheit 0,23 DM in 0,12 DM -, und das Einspielen neuer Daten, wie etwa neuer Rufnummernpläne und dergleichen.

Das erfindungsgemäße Verfahren ist bestens an die Praxis angepaßt. So kann beispielsweise der Reihe nach an sämtlichen Telekommunikationsanlagen eines Kunden, wie etwa bei sämtlichen Zweigstellen einer Bank, von einem zum nächsten Tag eine der genannten Service-Aktionen problemlos und ohne Anwesenheit einer Bedienperson durchgeführt werden.

Zusammenfassend kann also zum erfindungsgemäßen Verfahren festgestellt werden, daß es auf der Grundlage des bestehenden Service-Protokolls von Telekommunikationsanlagen implementiert werden kann, daß aufgrund der erfindungsgemäß vorgesehenen Zeitsteuerung Service-Aktionen zu einem beliebigen Zeitpunkt ausgeführt werden können, insbesondere auch während des günstigen Mondscheintarifs, und daß Fernservice-Aktionen über beispielsweise ISDN plus Modem kostengünstig realisiert werden können.

### Zeichnung

Die Erfindung wird anhand der folgenden Figuren näher erläutert. Dabei zeigen:
- Figur 1: eine schematische Darstellung einer Anordnung zum automatischen rechnergesteuerten Abarbeiten von Fernservice-Aktionen für mehrere Telekommunikationsanlagen über das öffentliche Telekommunikationsnetz;
- Figur 2: die Anzeige einer Benutzeroberfläche auf dem Monitor des PC von Figur 1;
- Figur 3: die Bildschirmdarstellung eines Batch-Auftrags; und
- Figur 4: schematisch die PC-Applikation des erfindungsgemäßen Verfahrens für Windows.

### Beschreibung des Ausführungsbeispiels

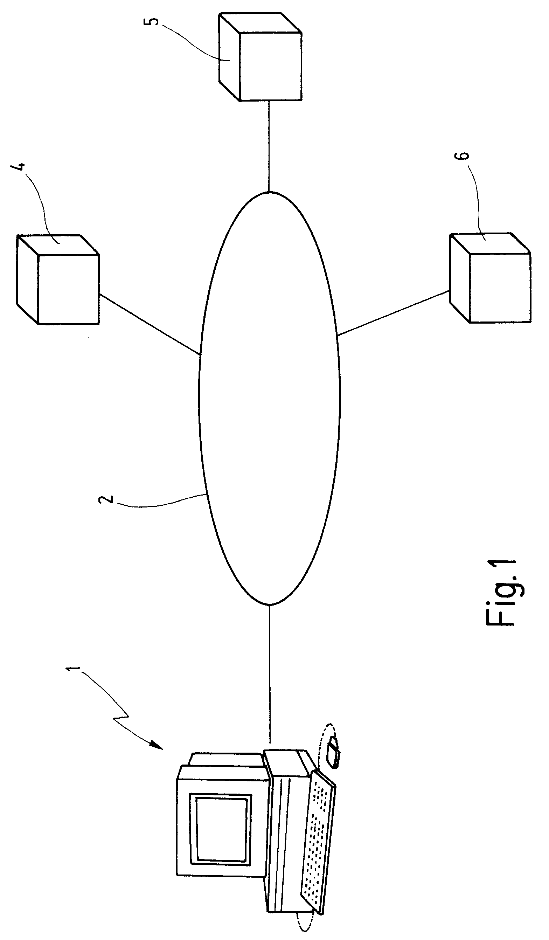

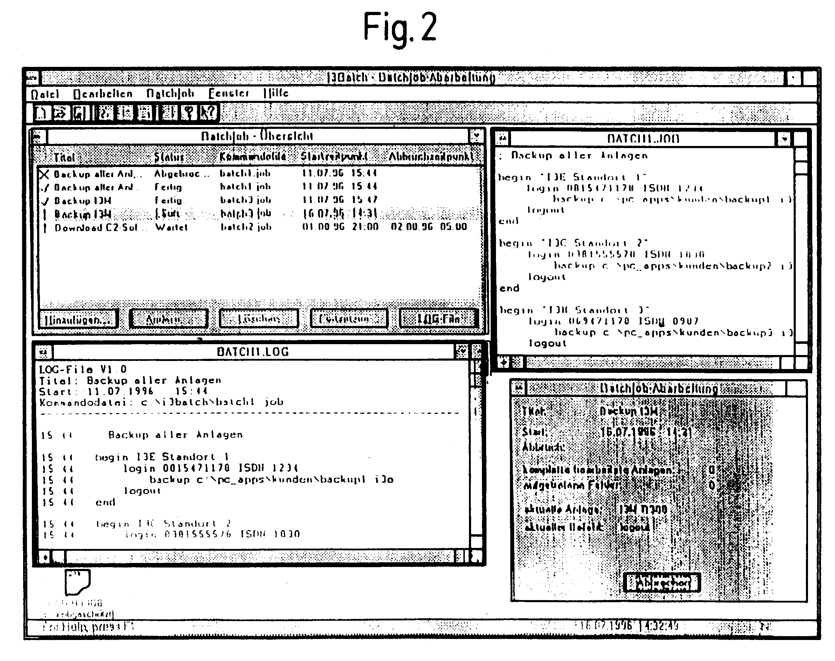

Wie in Figur 1 gezeigt, ist ein Personalcomputer bzw. PC 1 über ISDN und ein Modem an das öffentliche Telekommunikationsnetz 2 angeschlossen, an das außerdem beispielhaft drei Telekommunikationsanlagen 4, 5 und 6 eines Benutzers angeschlossen sind, die jeweils ein proprietäres Schnittstellen-Protokoll bzw. eine I3-Schnittstelle aufweisen. Eine solche Schnittstelle weist beispielsweise das Telekommunikationssystem Integral 33xE von Bosch auf (Prospekt 16.0012.1317 Bosch Telenorma). Änderungen von Service-Leistungen können dort direkt online durchgeführt werden.

Die in Figur 1 gezeigte Anordnung eignet sich zur Durchführung des erfindungsgemäßen Verfahrens zum automatischen, rechnergesteuerten Abarbeiten von Fernservice-Aktionen für mehrere Telekommunikationsanlagen. Demnach werden die gewünschten Service-Aktionen, wie etwa ein Software-Update von Steuerungsbaugruppen vom Benutzer mittels einer definierten Kommandosprache bzw. einer Syntax in den Personalcomputer 1 eingegeben und in einer Kommandodatei abgespeichert. Dem Anwender steht dabei frei, ob er die Service-Aktionen für die drei Telekommunikationsanlagen 4,5 und 6 auf eine oder mehrere Kommandodateien verteilt. Für jede Kommandodatei kann ein Startzeitpunkt, optional ein Abbruchzeitpunkt sowie ein täglicher Unterbrechungszeitraum eingegeben werden, so daß sichergestellt ist, daß die Service-Aktionen außerhalb der Geschäftszeit eines Kunden stattfinden, bei dem die Telekommunikationsanlagen 4, 5 und 6 installiert sind. Die Kommandodatei bzw. die Kommandodateien werden mit diesen Zeitangaben verknüpft, wodurch sich ein 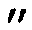 Batch-Auftrag" ergibt.

Eine Batch-Betriebsart des erfindungsgemäßen Verfahrens übernimmt im Personalcomputer 1 die Zeitsteuerung/Überwachung der Batch-Aufträge mit Hilfe der Rechner-Systemzeit; d.h. das erfindungsgemäße Verfahren läuft kontinuierlich ab. Sämtliche der anstehenden Batch-Aufträge werden in einer Übersichtsliste verwaltet, die auf dem Monitor des Personalcomputers 1 angezeigt wird. Der Benutzer erhält außerdem auf diesem Weg den aktuellen Status eines jeden Batch-Auftrags angezeigt. Sämtliche Service-Aktionen werden zudem in einer Journal-Datei mit Datum und Uhrzeit protokolliert.

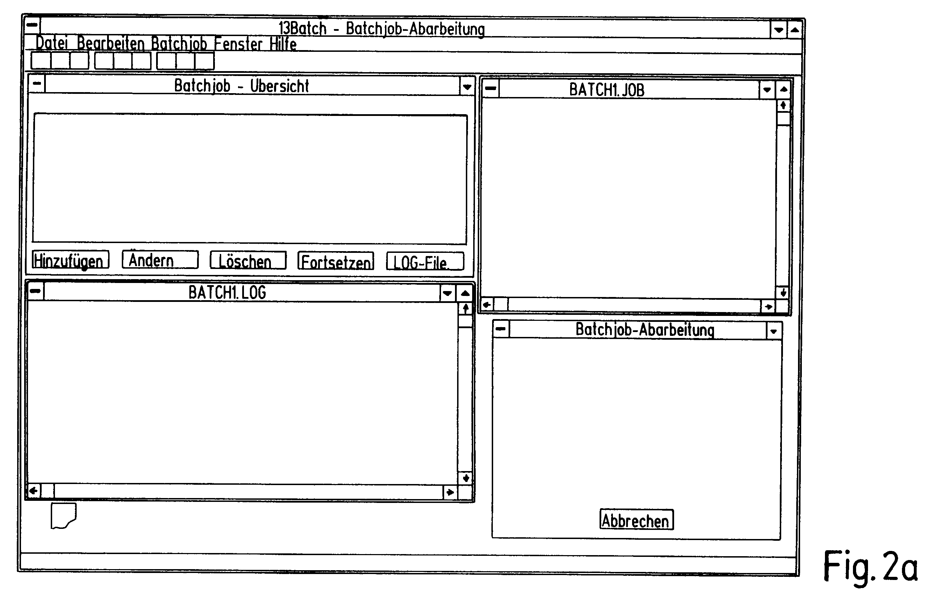

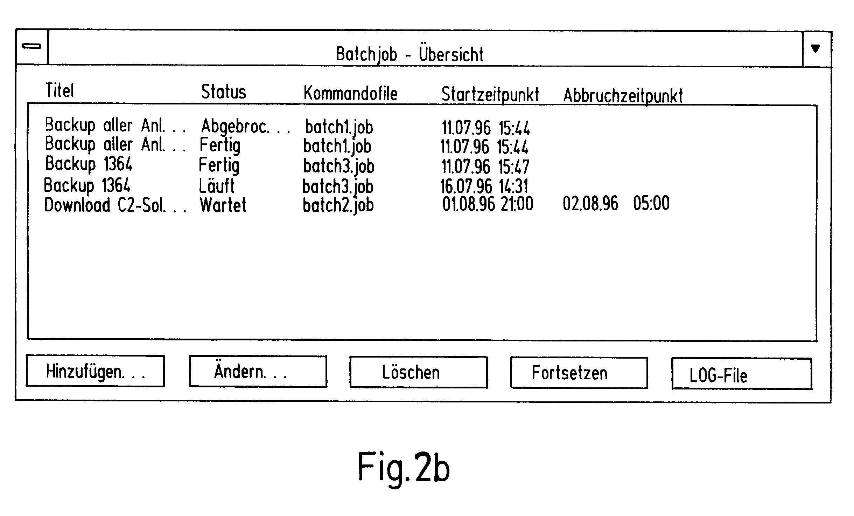

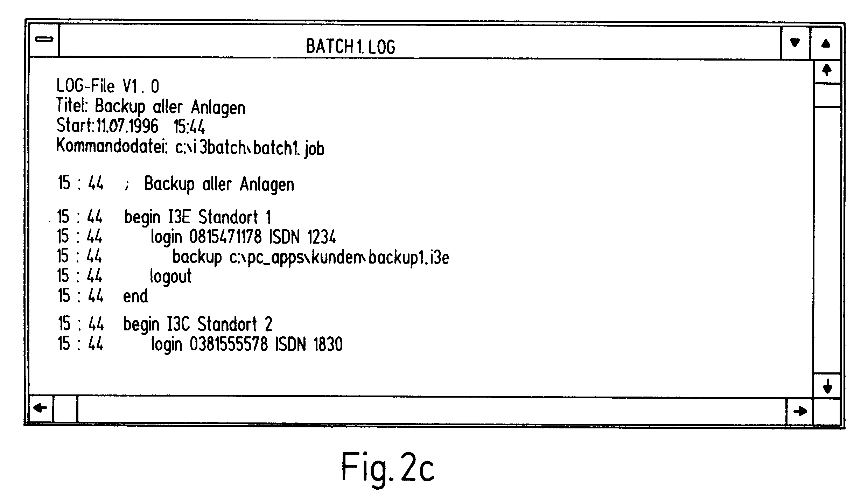

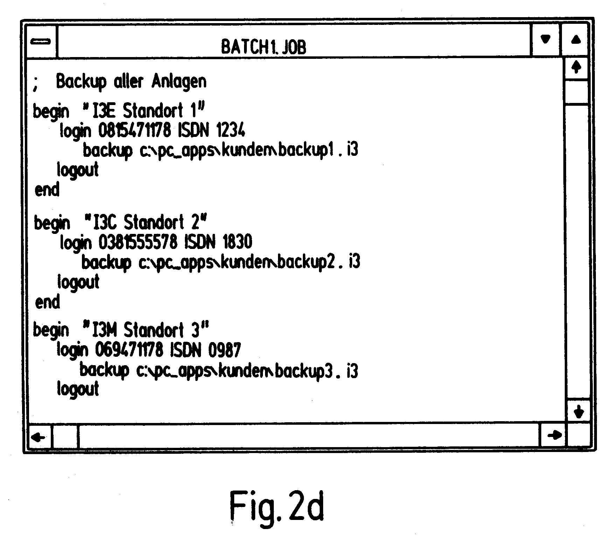

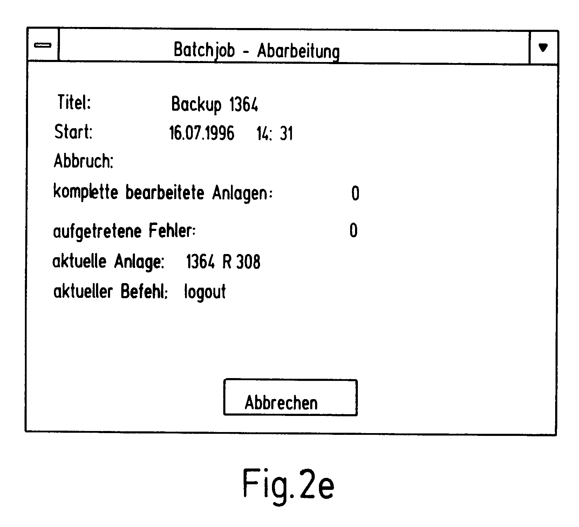

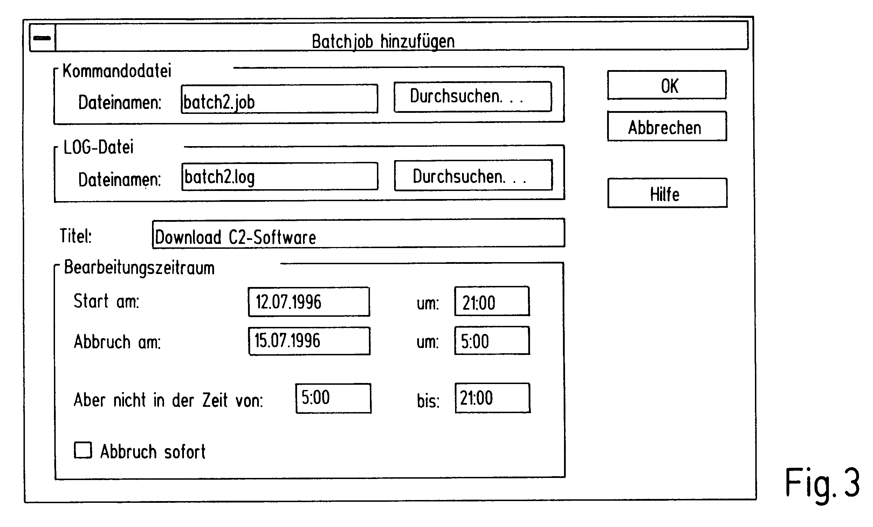

Der soeben erläuterte Ablauf des Verfahrens kann außerdem den Figuren 2 und 3 entnommen werden.

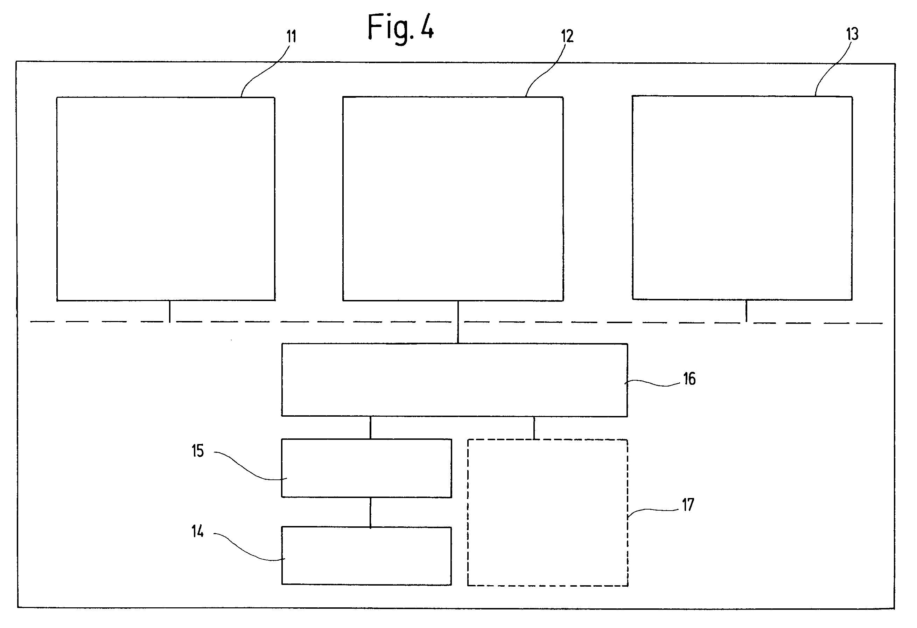

Figur 4 zeigt schematisch die Strukturierung der PC-Applikationen des erfindungsgemäßen Verfahrens für Windows; demnach handelt es sich bei der Applikation 1 (Bezugszeichen 11) um den Batch-Betrieb, bei der Applikation 2 (12) um den AIC-Receiver und bei den Applikationen n (13) z.B. um einen Download-Vorgang etc.

An den AIC-Receiver (Applikation 2) ist das öffentliche Netz 2 über einen lokalen Service-Zugang angeschlossen. Alternativ hierzu kann der Anschluß, wie in Figur 1 schematisch gezeigt, über ISDN/Modem erfolgen.

Die CAPI.DLL 14 ist eine Software-Komponente, welche vom ISDN-Kartenhersteller beim Kauf der Karte mitgeliefert wird. Sie stellt dem Programmierer eine Software-Schnittstelle (API) zur Ansteuerung der ISDN-Karte(n) zur Verfügung.

Die S0.DLL 15 ist ebenfalls eine Software-Komponente. Sie faßt Funktionen der CAPI.DLL komfortabler zusammen und bietet den darüberliegenden Software-Komponenten einfache Prozeduren für Verbindungsaufbau, Verbindungsabbau, Datentransfer und -empfang, Checksummenprüfung usw.

In Figur 4 wird desweiteren mit dem Bezugszeichen 16 eine I3-Service-API und mit 17 eine V.24 Modem und AEI-Steuerung gekennzeichnet.

## Patentansprüche

1. Verfahren zum Abarbeiten von zumindest einer Service Aktion für wenigstens eine Telekommunikationsanlage, die ein proprietäres Schnittstellenprotokoll bzw. eine I3-Service-Schnittstelle für einen analogen bzw. digitalen Service-Zugang aufweist, unter Steuerung durch einen Rechner, insbesondere einen PC, gekennzeichnet durch die Schritte:
Festlegen der Art der Service-Aktion über eine Benutzeroberfläche des Rechners und Abspeichern der festgelegten Service-Aktion in wenigstens einer Kommandodatei,
Festlegen eines Zeitrahmens für die Service-Aktion,
Erstellen eines Batch-Auftrags durch Verknüpfen der Kommandodatei mit dem Zeitrahmen,
Verknüpfen des Batch-Auftrags mit der Rechner-Systemzeit, und
Abarbeiten des Batch-Auftrags über das Schnittstellenprotokoll der Telekommunikationsanlage.

2. Verfahren nach Anspruch 1, dadurch gekennzeichnet, daß die Service-Aktion mittels einer vorab definierten Kommandosprache bzw. Syntax in den Rechner eingegeben wird.

3. Verfahren nach Anspruch 1 oder 2, dadurch gekennzeichnet, daß die Service-Aktion für mehrere Telekommunikationsanlagen festgelegt wird.

4. Verfahren nach Anspruch 1, 2 oder 3, dadurch gekennzeichnet, daß mehrere Service-Aktionen festgelegt und abgespeichert werden, und daß entsprechend mehrere Batch-Aufträge erstellt und abgearbeitet werden.

5. Verfahren nach Anspruch 1, 2 oder 3, dadurch gekennzeichnet, daß die Service-Aktionen, vor allem für die mehreren Telekommunikationsanlagen in mehreren Kommandodateien abgespeichert werden.

6. Verfahren nach einem der Ansprüche 1 bis 5, dadurch gekennzeichnet, daß die Service-Aktion bzw. die Service-Aktionen zu der Telekommunikationsanlage bzw. den Telekommunikationsanlagen fernübertragen wird bzw. werden .

7. Verfahren nach Anspruch 6, dadurch gekennzeichnet, daß die Fernübertragung über das Telekommunikationsnetz erfolgt.

8. Verfahren nach Anspruch 7, dadurch gekennzeichnet, daß die Fernübertragung mittels ISDN und Modem erfolgt.

9. Verfahren nach Anspruch 7, dadurch gekennzeichnet, daß die Fernübertragung mittels einer externen Schnittstelle, wie etwa einer S0-, einer a/b-, einer V.24- oder einer AEI-Schnittstelle erfolgt.

10. Verfahren nach einem der Ansprüche 1 bis 9, dadurch gekennzeichnet, daß der Zeitrahmen einen Startzeitpunkt aufweist.

11. Verfahren nach Anspruch 10, dadurch gekennzeichnet, daß der Zeitrahmen einen optimalen Abbruchzeitpunkt aufweist.

12. Verfahren nach Anspruch 10 oder 11, dadurch gekennzeichnet, daß der Zeitrahmen einen optimalen täglichen Unterbrechungszeitraum aufweist.

13. Verfahren nach einem der Ansprüche 4 bis 12, dadurch gekennzeichnet, daß die mehreren Batch-Aufträge in einer Übersichtsliste verwaltet und angezeigt werden.

14. verfahren nach einem der Ansprüche 3 bis 13, dadurch gekennzeichnet, daß die mehreren Service-Aktionen in einer Journal-Datei mit Datum, Uhrzeit und Ergebnis protokolliert werden.

15. Verfahren nach einem der Ansprüche 1 bis 14, dadurch gekennzeichnet, daß folgende Service-Aktionen alternativ oder kumulativ in Betracht kommen: Software Aktualisierung bzw. -Update von Steuerungsbaugruppen, Umstellung einzelner Daten, z.B. Währung, Einspielen neuer Daten, z.B. Rufnummernpläne, regelmäßige Datensicherungen (Backops der Anlagen starten).
